# EUROPEAN PATENT SPECIFICATION

(11) **EP 3 687 116 B1**
(45) Date of publication and mention of the grant of the patent: **05.07.2023**
(21) Application number: 19153162.3
(22) Date of filing: 22.01.2019
(51) Int. Cl.: H04L 12/28

(54) **MONITORING FACILITIES BY SENSORS**
ÜBERWACHUNGSMÖGLICHKEITEN DURCH SENSOREN
SURVEILLANCE D'INSTALLATIONS PAR DES CAPTEURS

(43) Date of publication of application: 29.07.2020
(73) Proprietor: Caverion Oyj, 01650 Vantaa (FI)
(72) Inventor: Härkönen, Tuomo, 01650 Vantaa (FI)
(74) Representative: Berggren Oy

(56) References cited:
- EP-A2- 2 336 886
- CN-A- 108 055 339
- US-A1- 2008 125 873
- US-A1- 2015 304 157
- US-A1- 2017 006 119

## Description

### FIELD

The present invention relates to monitoring facilities by sensors according to different loT protocols.

### BACKGROUND

Cloud computing allows a user to utilize applications or services running on a remotely located computer rather than on the user's local computer. For example, data may be processed in the cloud by forwarding the data from a client computer to a server computer, where the data is processed before returning the processed data back to the client computer. This way, the client computer offloads processing tasks to computers in the cloud.

US20180084085A1 discloses using virtual native technology to allow for the fluid interoperability of incompatible Internet of Things (loT) cloud platforms and the services and devices administrated thereby. A virtual native server enforces data and state synchronization between a representation of loT device, in the form of virtual native device, and the loT device itself.

US2015/304157 A1 discloses distributing visual interface modules for monitoring and controlling network devices in a wireless network. A user may only be able to control certain types of network devices using an application with a user interface designed to control those types of network devices. Interface modules for controlling network devices within wireless and wired networks are provided dynamically. Unique identifiers of network devices are used to determine customized interface modules for the network devices. A customized interface module is associated with an interface element usable to control a specific function performed by a network device. Interface elements of interface modules are displayed on a display of a mobile device.

US 2017/006119 A1 discloses an integrated user interface for consuming services across different distributed networks. Ul extensions for different services are hosted in the same browser window. Browser loads shell, which loads a list of the user's cloud service subscriptions. Based upon the subscriptions, the shell can determine what assets and services the user is registered for and where those are located in cloud services. Shell then loads native Ul extensions, corresponding to cloud services, respectively. Shell and cloud extensions can be loaded, for example, from a locally hosted web page or from a remote web page hosted by one of the cloud services. Each of the cloud extensions are adapted to connect to a cloud portal for the corresponding cloud service.

CN 108 055 339 A discloses scanning QR code on a home appliance to identify the unique identification, type, and manufacturer information of the home appliance. The specification of the QR code content is uniformly defined by the cloud platform interconnection protocol.

However, maintaining the data and state synchronization causes unnecessary data transfer particularly in situations, where data of one or more of the incompatible loT devices is not needed.

### SUMMARY

It is an objective of the present invention alleviate at least part of the disadvantages indicated above. The objective is achieved by the subject-matter of the appended independent claims.

Further aspects of the present invention are defined by the dependent claims.

At least some embodiments of the present invention provide a single cloud platform for controlling monitoring of facilities by sensors according to different loT protocols.

### SUMMARY OF DRAWINGS

In the following embodiments are described with reference to the accompanying drawings in which
Fig. 1 illustrates an example of a method;
Fig. 2 illustrate an example of an loT system;
Fig. 3 illustrates an example of user interface action; and
Fig. 4 illustrates an example of adaptable user interface element or indicator of the user interface.

### DETAILED DESCRIPTION

In connection with monitoring facilities by sensors according to different loT protocols, information identifying sensors connected to sensor cloud platforms and information identifying installation locations of the sensors are received at a user cloud platform. Based on the obtained information identifying one or more sensors it is determined sensor cloud platforms that support loT protocols of the sensors. At the user cloud platform, user interface elements representing each of the sensors are added to at least one monitoring toolset. In response to a user interface action on a user interface element of the monitoring toolset, sensor data is received from the sensor cloud platform connected to the sensor by an loT protocol supported by the sensor associated with the user interface element. In this way sensor data may be received at the user cloud platform from sensors that are connected to sensor cloud platforms over various protocols. Since the sensor data is transferred from the sensor cloud platforms to the user cloud platform in response to user interface actions, the transfer of the sensor data may be adapted based on the user interface actions, whereby unnecessary data transfer may be avoided. On the other hand, the sensor cloud platform may collect process data from the sensors even if sensor data is not transferred from the sensor cloud platforms to the user cloud platform, such that the collected data or processed data from the sensors may be provided in response to user interface action. Accordingly, sensor data may be transferred as needed to the user cloud.

Particularly, when sensors according to different loT protocols are used for monitoring facilities, such as buildings and parts of buildings, the number of SCPs and amount of sensor data may be large, whereby controlling the sensors by accessing each SCP separately may become a time consuming and complex task at least because each SCP requires separate credentials and application for accessing sensor data. However, in solutions in accordance with the embodiments described herein, monitoring of facilities by sensors according to different loT protocols is enabled to a user via a single cloud platform.

An loT protocol may refer to a communications protocol between a sensor and an SCP. The loT protocol provides machine-to-machine communications between the sensors and the sensor cloud platform. The loT protocol may be a system of rules that allow transmission of information such as messages over a transmission channel between the sensor and the SCP. In an example, the loT protocol may define rules, syntax, semantics and synchronization of communication and possible error recovery methods. The loT protocol may be implemented by hardware, software, or a combination of both. Example implementations of loT protocols may comprise one or more virtual machines (VMs), processors, processor cores, data storage devices/memories, loT communications circuitries and/or loT communications modules. The loT protocol may be applied on at least one transmission channel between the sensor and the SCP. Examples of the transmission channels comprise: sensor to gateway transmission channel and gateway to SCP transmission channel. The sensor to gateway transmission channel refers to transmission channel between an loT device, e.g. a sensor, and a gateway. The gateway may provide processing of data, e.g. consolidation of data, from sensors and routing of the data to a relevant data system, e.g. an SCP. The gateway to SCP transmission channel refers to a transmission channel between the gateway and an SCP. The loT protocol may be a protocol specific to a type of loT technology. A sensor configured to operate according to one loT protocol may be connected to an SCP or gateway that is configured to support the loT protocol of the sensor. If the SPC or gateway does not support the same loT protocol, it is incompatible with the sensor and the sensor cannot be connected to the SCP. Examples of different loT technologies comprise loT technologies that are commercially available such as Long Range Wide Area Network (LoRaWAN), NarrowBand - Internet of Things (NB-loT) and Sigfox.

A cloud platform is a platform for hosting services on the Internet and implemented according to cloud computing architecture. Accordingly, the cloud platform provides scalable services hosted on the Internet. The platform comprises software configurable computer system resources such as one or more virtual machines (VMs), processors, processor cores, data storage devices/memories and/or applications.

A user cloud platform refers to a cloud platform that is configured to provide a user interface to user. The user interface may be provided to a user device of the user. The user cloud platform may be configured to communicate with one or more other cloud platforms. The other cloud platforms may comprise sensor cloud platforms that are configured to connect to sensors. In an example the user device may be configured to communicate with the user cloud platform. The user device may comprise a display that is configured to display the user interface. The user interface may be displayed based on user interface configuration data stored at the user cloud platform. When the user device is connected to the user cloud, data for displaying the user interface based on the user interface configuration data may be communicated from the user cloud platform to the user device.

A sensor cloud platform refers to a cloud platform that is configured to connect to sensors. The sensor cloud platform may be connected to the sensors using an loT protocol.

A sensor may be a device, module, or subsystem whose purpose is to perform measurements to detect events or changes in its environment and send the information to other electronics, for example a computer, a processor, a processor core and/or an loT communications circuitry or loT communications module. The loT communications circuitry or loT communications module may be configured to communicate according to an loT protocol. The sensor may generate data comprising measurement results and/or status of the sensor. The data may be transmitted from the sensor to a sensor cloud platform. The data may be transmitted via a gateway that is connected to the sensor cloud platform via a backhaul. It should be appreciated that the data from the sensor, i.e. sensor data, may be processed by the gateway and/or the sensor cloud platform. However, data or sensor data is used herein to refer to data from one or more sensors and also data that is obtained by processing data from one or more sensors, it not specifically stated otherwise. Examples of sensors comprise sensors for detecting light, motion, temperature, magnetic fields, gravity, humidity, moisture, vibration, pressure, electrical fields, sound, environmental molecules and other physical aspects of the external environment.

A user device may be a device configured to communicate with a user cloud platform on the Internet. The user device is adapted to provide a user interface to a user of the user device. The user device may comprise a display that is configured to display the user interface. The user device may further comprise a communications circuitry or a communications module for communications data with the user cloud platform such that at least data for causing to display the user interface may be communicated between the user device and the user cloud platform. Also other data may be communicated, such as data for authorizing the user to the user cloud platform and information identifying sensors connected to different sensor cloud platforms and information identifying installation locations of the sensors. Examples of user devices comprise devices capable of executing one or more one or more applications and devices configured display a user interface and receive commands from the user regarding user interface elements displayed on the user interface. The user device may comprise a display. The display may be a touch screen for receiving commands from the user based on a touch or gesture of the user. Alternatively or additionally, the user devices may comprise input devices such as buttons, computer mice, keys and/or keyboards for receiving commands form the user. Suitable user devices comprise smart phones, tablet computers and computers capable of displaying user interface and receiving input from user. In at least some embodiments, the user device may be configured to read tags or codes on sensors. The user device may comprise a reader device for reading the tags or codes. Examples of the reader device comprise a camera and a near field communications circuitry. The user device may comprise an application configured receive data from the reader device such that, when the reader device is used to generate data from a tag or code, the generated data may be processed by the application such that the code or tag is read. A smart phone application installed on a smart phone comprising a reader device is one example of such an application.

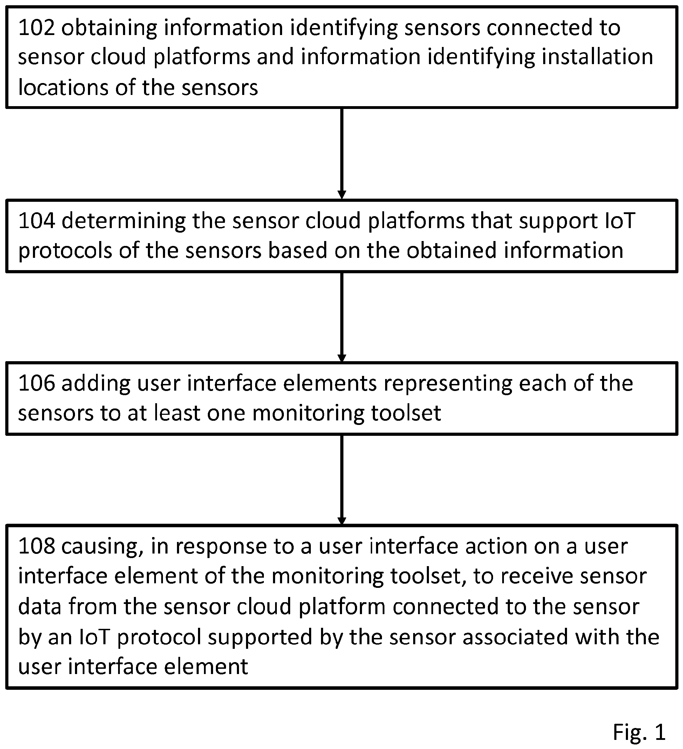

Referring to Fig. 1 there is illustrated an example of a method. The method is performed by a user cloud platform (UCP). The method provides monitoring facilities by sensors connected to cloud platforms according to different loT protocols. Phase 102 comprises obtaining, at the UCP, information identifying sensors connected to sensor cloud platforms and information identifying installation locations of the sensors. Phase 104 comprises determining at the UCP, the sensor cloud platforms that support loT protocols of the sensors based on the obtained information. Phase 106 comprises adding, at the UCP, user interface elements representing each of the sensors to at least one monitoring toolset. Phase 108 comprises causing, at the UCP, in response to a user interface action on a user interface element of the monitoring toolset, to receive sensor data from the sensor cloud platform connected to the sensor by an loT protocol supported by the sensor associated with the user interface element. Since the sensor data is transferred from the SCPs to the UCP in response to user interface action, the transfer of the sensor data may be adapted based on user interface actions, whereby unnecessary data transfer may be avoided. On the other hand, the SCP may collect or process data from the sensors even if sensor data is not transferred from the sensor cloud platforms to the user cloud platform, such that the collected data or processed data from the sensors may be provided in response to user interface action. Since different SCPs are configured to connect to sensors according to different loT protocol one SCP may support one or more loT protocols that are different from loT protocols supported by another SCP, whereby loT sensors connected to one SCP may not be supported by the other SCP. Therefore, a sensor may be incompatible with an SCP if the SCP does not support the same loT protocol with the sensor. However, the user interface action provides that the user may configure monitoring by sensors according to different loT protocols without accessing each SCP separately.

Particularly, when sensors according to different loT protocols are used for monitoring facilities, the number of SCPs and amount of sensor data may be large, whereby controlling the sensors by accessing each SCP separately may become a time consuming and complex task at least because each SCP requires separate credentials and application for accessing sensor data. However, in solutions in accordance with the embodiments described herein, monitoring of facilities by sensors according to different loT protocols is enabled to a user via a single cloud platform.

In an example phase 106 comprises adding user interface elements to more than one, such as two or three, monitoring toolset based on information identifying installation locations of the sensors. In this way a plurality of monitoring toolsets may be populated with user interface elements representing sensors that are spatially associated to each other. The sensors are spatially associated at least when their installation locations are in the same building or part of the building. Having the user interface elements of the spatially associated sensors in the same monitoring toolset provides that the user interface elements of the sensors may be easily accessible for user interface actions of the user.

Phase 108 comprises that the UCP is caused to activate or de-activate data transfer from the SCP of the sensor to the UCP in response to the user interface action. In this way, the data may be transferred from the sensor to the SCP without interruptions but data from the SCP to the user cloud platform may be transferred as needed for monitoring facilities.

In an embodiment, phase 108 comprises that the data transfer is activated or de-activated via an interface between the SCP of the sensor and the UCP.

In an embodiment phase 108 comprises that the data transfer is activated via web service interface, for example Representational State Transfer (REST) Application Programming Interface (API). The web service interface provides interoperability between the SCP and the UCP. The web service interface provides that the UCP may make requests to the Uniform Resource Indicator (URI) hosted by the SCP. The SCP may respond to a request from the UCP with response having a payload formatted in Hypertext Markup Language (HTML), Extensible Markup Language (XML), JavaScript Object Notation (JSON), for example.

Phase 108 comprises, in response to a further user interface action on the user interface element or an indicator of the user interface element, stopping reception of sensor data from the sensor cloud platform connected to the sensor. In this way, when monitoring by the sensor is not needed, communications of the sensor data between the SCP and UCP may be stopped and communications resources as well as processing resources at least in the UCP may be saved.

In an embodiment, phase 102 comprises that the information identifying the sensors comprise an identifier of the sensor and an identifier of one or more SCPs configured to connect to the sensor. In this way the UCP has information for causing to receive sensor data from the SCPs connected to the sensors.

In an embodiment, phase 102 comprises that the information identifying one or more sensors and the information identifying installation locations of the sensors are obtained from at least one smart phone application configured to read tags/codes provided on sensors. In this way the UCP may obtain information associated with sensors that may be according to different loT protocols, whereby the UCP may configure connections to SCPs of the sensors for monitoring.

In an embodiment, phase 102 comprises that the information identifying installation locations of the sensors comprise at least part of a building and/or at least a part of a floor plan of the building. Examples of information identifying installation locations comprise information identifying a building, a floor and/or a room. The information identifying installation locations may be input by a user to a smart phone application. The smart phone application may be executed on a smart phone and configured to cause to transmit the information identifying installation location obtained from the user to the UCP.

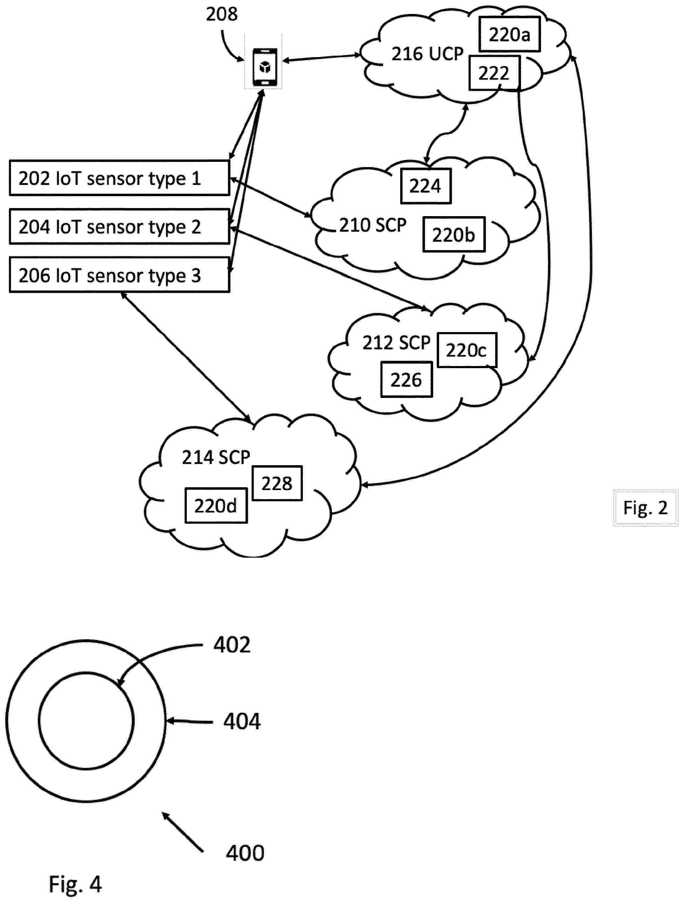

Fig. 2 illustrates an example of an loT system. The system may comprise a UCP 216 and one or more SCPs 210, 212 and 214. The method of Fig. 1 may be executed in the loT system of Fig. 2 for example by the UCP 216 in Fig. 2. The UCP is configured for communications with one or more user devices 208 and the SCPs via internet as illustrated by double-headed arrows. Accordingly, user devices that have internet connectivity may connect to the UCP for obtaining access to services of the UCP. For this purpose, the UCP may comprise a user server that is configured for communications with the use device. The SCPs are configured to communicate with one or more sensors 202, 204, 206 by loT protocols and to store data received from the sensors. The sensors may be of different types such that a sensor may be configured for communications according to a specific loT protocol that may not be supported by all of the SCPs. At least a part of the SCPs may utilize different loT protocols than one or more other SCPs and each sensor may be connected to an SCP that supports loT protocol of the sensor. Accordingly, connections between each SCP and compatible sensors may be implemented using devices configured in accordance to a specific loT protocol supported by the SCP. It should be appreciated that a sensor may be connected to an SCP via an edge gateway that may provide functionalities, such as pre-processing of data from sensors, securing connectivity to cloud entity, using systems such as WebSockets, the event hub, and, even in some cases, edge analytics or fog computing. The UCP and SCPs may comprise interfaces 222, 224, 226, 228 via which they may communicate data. The interfaces may be webservice interfaces. The interface 222 at the UCP may be configured to communicate with all of the interfaces of the SCPs. In this way the interfaces 224, 226, 228 may be configured specific to the SCPs. The UCP and SCPs may comprise cloud servers 220a, 220b, 220c, 220d that may be configured control one or more cloud entities of the corresponding platforms, such as the interfaces present on the same platform, to cause one or more functionalities described with an embodiment. The cloud servers may comprise resources that comprise one or more processors and a data storage device such as a memory to cause execution one or more functionalities described with an embodiment. The memory may be non-volatile memory and store instructions such as computer program code or computer readable instructions that when executed by the cloud server cause execution of the functionalities.

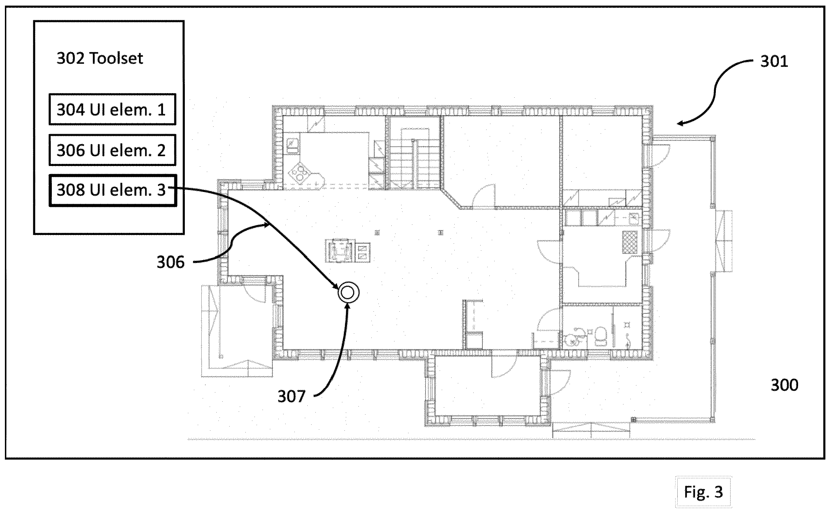

Fig. 3 illustrates an example of user interface action. The user interface action may be caused by an operation of a user on a user interface 300, for example in accordance with phase 108 described with Fig. 1. The user interface action may be received on a user device of an loT system described with Fig. 2.

In an example, user interface is displayed on a user device that is configured to communicate with a UCP 216. The user device may comprise a display that is configured to display the user interface 300. In an example, the user interface may be displayed based on user interface configuration data stored at the user cloud platform. When the user device is connected to the UCP, data for displaying the user interface based on the user interface configuration data may be communicated from the user cloud platform to the user device such that the user interface may be displayed on the display of the user device.

According to an embodiment, the user interface may comprise one or more user interface elements 304, 306, 308. The user interface elements may be provided in a monitoring toolset 302 that may be configured with the user interface elements in accordance with phase 106 of Fig. 1. The user interface elements provide the user with information regarding which sensors may be utilized in monitoring a specific location, for example a building or a part of the building, such as a room. The monitoring toolset comprises user interface elements representing sensors according to different loT protocols. Reception of sensor data form the sensors may be activated by a user interface action of the user on the user interface elements of the sensors.

It should be appreciated that the monitoring toolset 302 may be a user interface element that is formed by a group of the user interface elements 304, 306, 308 representing the sensors. The monitoring toolset provides that the user may access the user interface elements easily for monitoring a building and/or a part of the building by the sensors represented by the user interface elements irrespective of whether the sensors are according to the same loT protocol.

In an example, the user interface 300 may be configured to allow a user to apply user interface actions on one or more of the user interface elements 304, 306, 308. A user interface action applied by the user on a user interface element may provide that sensor data may be received from a SCP of the sensor represented by the user interface element on which the user interface action is applied by the user. Accordingly, the user interface actions provide that the user may cause reception of data from the sensors that may be connected to SCPs that support different loT protocols.

Examples of user interface actions comprise one or more inputs or commands from the user on the user interface. The commands may indicate one of the user interface elements 304, 306, 308 and a location on the visual representation of the installation location 301 of the sensor. The location on the visual representation of the installation location of the sensor may identify a building and/or at least a part of a floor plan of the building. The commands may be input by the user touching the display or the user operating a pointer on the display for indicating the user interface element and the location on the visual representation of the installation location 301. Alternatively or additionally, gestures such as drag and drop by the pointer or touch may be used for moving the user interface element from the monitoring toolset to a location on the visual representation and serve for user interface actions.

In an embodiment, a user interface action at least in part causes the user interface element 304, 306, 308 or an indicator 307 of the user interface element to be associated with a visual representation of the installation location 301 of the sensor. Since a user interface element represents a sensor, associating the user interface element with the visual representation of the installation location provides the user with information whether the sensor associated with the user interface element is used for monitoring facilities. Examples of visually associating the user interface element to the installation location may comprise that the user interface element is at least partly overlapping with the visual representation of the installation location on the user interface. The user interface element may be overlapping with the representation of the installation location, when the user interface is within the visual representation of the installation location or partly within the visual representation of the installation location. The visual representation of the installation location may be a digital image, for example a digital image of a building and/or at least a part of a floor plan of the building.

In an example of the user interface action on the user interface element 308, the user interface element may be highlighted and/or an indicator of the user interface element may be added on the user interface on the visual representation of the installation location.

In an embodiment, a user interface action at least in part causes the user interface element 304, 306, 308 or an indicator 307 of the user interface element to be associated with a visual representation of the installation location 301 of the sensor. In this way the user cloud may determine that the user wants to apply a sensor that represents the user interface element for monitoring facilities and cause reception of sensor data from the sensor for example in accordance with phase 108 of Fig. 1. Moreover, the user making the user interface action understands which location is going to be monitored by the sensor representing the user interface element.

In an embodiment, in response to a further user interface action on the user interface element 304, 306, 308 or an indicator of the user interface element, reception of sensor data from the sensor cloud platform connected to the sensor may be stopped. In this connection, also association of the user interface element or the indicator of the user interface element may be dissolved. In this way the user interface supports the user to understand that the sensor associated with the user interface element is not used for monitoring facilities. In an example of dissolving the association, the indicator 307 may be removed from the user interface and/or any highlighting of the user interface element 308 may be removed.

Fig. 4 illustrates an example of adaptable user interface element. The adaptable user interface element may be a user interface element 304, 306, 308 described in Fig. 3 or an indicator 307 of the user interface element. The user interface element or the indicator 400 of the user interface element may be configured to adapt based on received sensor data from the SCP for example in phase 108. The indicator may be adapted based on settings configured to define a visual appearance of the indicator. A setting that is applied may be determined based on data from the SCP. The data may comprise measurement results and/or status of the sensor. In an example the indicator may comprise parts, e.g. areas 402, 404, that may be configured by the settings to have the same or different visual appearance. One of the areas may be controlled by settings that are determined based on the measurements results and the other of the areas may be controlled by different settings that are determined based on status of the sensor. In this way the user interface element may be configured by the settings to indicate the user one or more of the following: whether received measurement results are within a specific range of values and/or whether the sensor has a specific status, for example an alarm status or a status indicating that the sensor is faulty. The areas of the indicator provide that the visual appearance of the indicator may be formed by a combination of the visual appearances of the areas. In an example, a setting for the visual appearance of the indicator may be determined on the basis of data values of from the sensor. When a measurement result or measurement results received from a sensor are within a given range, one setting for the visual appearance may be applied. On the other hand, when a measurement result or measurement results received from a sensor are within another range, another setting for the visual appearance may be applied. In an example, a setting for the visual appearance of the indicator may be determined on the basis of the status of the sensor. Accordingly, the setting to be applied to the indicator may alternatively or additionally to the measurement results be determined based on the status of the sensor.

In an example the settings may define colors of the indicators or areas 402, 404 of the indicators. The colors may comprise e.g. green, yellow, red and black. In an example, the green and yellow color may identify corresponding ranges of data values. The red color may indicate an alarm status of the sensor and the black color may indicate that the sensor is faulty. Accordingly, the visual appearance of the indicator representing the sensor may indicate the user one or both of a range of received sensor data value(s) and a condition of the sensor.

An embodiment concerns a computer program comprising instructions that when executed by a user cloud platform causes one or more functionalities in accordance with a method described with an embodiment.

An embodiment concerns a computer-readable medium comprising instructions that, when executed by a user cloud platform causes one or more functionalities in accordance with a method described with an embodiment.

It is to be understood that the embodiments of the invention disclosed are not limited to the particular structures, process steps, or materials disclosed herein. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements and/or compositional elements may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary.

Furthermore, the described features, structures, or characteristics may be combined in any suitable manner in one or more embodiments. In the preceding description, numerous specific details are provided to provide a thorough understanding of embodiments of the invention. One skilled in the relevant art will recognize, however, that the invention can be practiced without one or more of the specific details, or with other methods, components, materials, etc. In other instances, well-known structures or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### LIST OF ACRONYMS

- loT: Internet of Things
- LoRaWAN: Long Range Wide Area Network
- NB-loT: NarrowBand - Internet of Things
- SCP: Sensor cloud platform
- UCP: User cloud platform

### LIST OF REFERENCE SIGNS

- 102 to 108: Phases of Fig. 1
- 202 to 206: Sensors
- 208: User Device
- 210 to 214: Sensor Cloud Platform
- 216: User Cloud Platform
- 220a to 220d: Cloud Server
- 222 to 228: Interfaces
- 300: User Interface
- 301: Visual representation of installation location
- 302: Monitoring toolset
- 304, 306, 308: User interface elements
- 307: Indicator
- 400: Indicator
- 402, 404: Areas

## Claims

1. A method **characterized in that** the method is for monitoring facilities by sensors according to different loT protocols, wherein the method comprises:
obtaining (102), at a user cloud platform configured to provide user interfaces to one or more user devices, information identifying the sensors connected to sensor cloud platforms and information identifying installation locations of the sensors;
determining (104), at the user cloud platform, the sensor cloud platforms that support loT protocols of the sensors based on the obtained information;
adding (106), at the user cloud platform, user interface elements representing each of the sensors to at least one monitoring toolset to be provided on the user interfaces;
causing (108), at the user cloud platform, in response to a user interface action on a user interface element of the monitoring toolset:
- to activate data transfer from the sensor cloud platform to the user cloud platform in response to the user interface action and to receive sensor data from the sensor cloud platform connected to the sensor by an loT protocol supported by the sensor associated with the user interface element; and
causing (108), at the user cloud platform, in response to a further user interface action on the user interface element or an indicator of the user interface element:
- to de-activate the data transfer from the sensor cloud platform to the user cloud platform and to stop reception of sensor data from the sensor cloud platform connected to the sensor.

2. The method according to claim 1, wherein the user interface action at least in part causes the user interface element or an indicator of the user interface element to be associated with a visual representation of the installation location of the sensor.

3. The method according to claim 2, wherein the user interface element or the indicator is configured to adapt based on received sensor data and/or sensor status from the sensor cloud platform.

4. The method according to claim 1, wherein the communications of sensor data of the sensor is activated or de-activated via an interface between the sensor cloud platform and the user cloud platform.

5. The method according to claim 4, wherein the interface is webservice interface.

6. The method according to any one of the preceding claims, wherein the information identifying sensors comprises identifiers of the sensors and identifiers of sensor cloud platforms configured to connect to the sensors.

7. The method according to any one of the preceding claims, wherein the information identifying installation locations of the sensors comprise at least part of a building and/or at least a part of a floor plan of the building.

8. The method according to any of the preceding claims, wherein the information identifying one or more sensors and the information identifying installation locations of the sensors are obtained from at least one smart phone application configured to read tags/codes provided on sensors.

9. A user cloud platform for monitoring facilities by sensors according to different loT protocols, **characterized in that** the user cloud platform is configured to provide user interfaces to one or more user devices and comprises at least one processor and at least one memory storing computer program code that when executed causes:
obtaining (102), at the user cloud platform, information identifying the sensors connected to sensor cloud platforms and information identifying installation locations of the sensors;
determining (104), at the user cloud platform, the sensor cloud platforms that support loT protocols of the sensors based on the obtained information;
adding (106), at the user cloud platform, user interface elements representing each of the sensors to at least one monitoring toolset to be provided on the user interfaces;
causing (108), at the user cloud platform, in response to a user interface action on a user interface element of the monitoring toolset:
- to activate data transfer from the sensor cloud platform to the user cloud platform in response to the user interface action and to receive sensor data from the sensor cloud platform connected to the sensor by an loT protocol supported by the sensor associated with the user interface element; and
causing (108), at the user cloud platform, in response to a further user interface action on the user interface element or an indicator of the user interface element:
- to de-activate the data transfer from the sensor cloud platform to the user cloud platform and to stop reception of sensor data from the sensor cloud platform connected to the sensor.

10. The user cloud platform according to claim 9, comprising computer program code that when executed causes the method according to any of claims 2 to 8 to be performed.

11. A computer program comprising instructions that when executed by a user cloud platform causes a method according to any of claims 1 to 8 to be performed.

12. A computer-readable medium comprising instructions, **characterized in that** execution of the instructions by a user cloud platform causes:
obtaining (102), at a user cloud platform configured to provide user interfaces to one or more user devices, information identifying sensors according to different loT protocols connected to sensor cloud platforms and information identifying installation locations of the sensors;
determining (104), at the user cloud platform, the sensor cloud platforms that support loT protocols of the sensors based on the obtained information;
adding (106), at the user cloud platform, user interface elements representing each of the sensors to at least one monitoring toolset to be provided on the user interfaces;
causing (108), at the user cloud platform, in response to a user interface action on a user interface element of the monitoring toolset:
- to activate data transfer from the sensor cloud platform to the user cloud platform in response to the user interface action and to receive sensor data from the sensor cloud platform connected to the sensor by an loT protocol supported by the sensor associated with the user interface element; and
causing (108), at the user cloud platform, in response to a further user interface action on the user interface element or an indicator of the user interface element:
- to de-activate the data transfer from the sensor cloud platform to the user cloud platform and to stop reception of sensor data from the sensor cloud platform connected to the sensor.

## Patentansprüche

1. Verfahren, **dadurch gekennzeichnet, dass** das Verfahren zum Überwachen von Einrichtungen durch Sensoren gemäß unterschiedlichen IoT-Protokollen dient, wobei das Verfahren Folgendes umfasst:
Erhalten (102), auf einer Benutzer-Cloud-Plattform, die so konfiguriert ist, dass sie Benutzerschnittstellen für ein oder mehrere Benutzergeräte bereitstellt, von Informationen, die die Sensoren identifizieren, die mit Sensor-Cloud-Plattformen verbunden sind, und von Informationen, die Installationsorte der Sensoren identifizieren;
Bestimmen (104) auf der Benutzer-Cloud-Plattform der Sensor-Cloud-Plattformen, die IoT-Protokolle der Sensoren unterstützen, basierend auf den erhaltenen Informationen;
Hinzufügen (106), auf der Benutzer-Cloud-Plattform, von Benutzerschnittstellenelementen, die jeden der Sensoren darstellen, zu mindestens einem Überwachungs-Toolset, das auf den Benutzerschnittstellen bereitzustellen ist;
Bewirken (108), auf der Benutzer-Cloud-Plattform, als Reaktion auf eine Benutzerschnittstellenaktion auf einem Benutzerschnittstellenelement des Überwachungstoolsets:
- die Datenübertragung von der Sensor-Cloud-Plattform zur Benutzer-Cloud-Plattform als Reaktion auf die Aktion der Benutzerschnittstelle zu aktivieren, und Sensordaten von der Sensor-Cloud-Plattform zu empfangen, die mit dem Sensor durch ein IoT-Protokoll verbunden ist, das von dem Sensor unterstützt wird, der dem Benutzerschnittstellenelement zugeordnet ist; und Bewirken (108) auf der Benutzer-Cloud-Plattform als Reaktion auf eine weitere Benutzerschnittstellenaktion auf dem Benutzerschnittstellenelement oder einem Indikator des Benutzerschnittstellenelements:
- die Datenübertragung von der Sensor-Cloud-Plattform zur Nutzer-Cloud-Plattform zu deaktivieren und den Empfang von Sensordaten von der mit dem Sensor verbundenen Sensor-Cloud-Plattform zu unterbinden.

2. Verfahren nach Anspruch 1, wobei die Benutzerschnittstellenaktion zumindest teilweise bewirkt, dass das Benutzerschnittstellenelement oder ein Indikator des Benutzerschnittstellenelements mit einer visuellen Darstellung des Einbauorts des Sensors verknüpft wird.

3. Verfahren nach Anspruch 2, wobei das Benutzerschnittstellenelement oder der Indikator dazu konfiguriert ist, sich basierend auf empfangenen Sensordaten und/oder Sensorstatus von der Sensor-Cloud-Plattform anzupassen.

4. Verfahren nach Anspruch 1, wobei die Kommunikation von Sensordaten des Sensors über eine Schnittstelle zwischen der Sensor-Cloud-Plattform und der Nutzer-Cloud-Plattform aktiviert oder deaktiviert wird.

5. Verfahren nach Anspruch 4, wobei die Schnittstelle eine Webservice-Schnittstelle ist.

6. Verfahren nach einem der vorhergehenden Ansprüche, wobei die Informationen, die Sensoren identifizieren, Kennungen der Sensoren und Kennungen von Sensor-Cloud-Plattformen umfassen, die dazu konfiguriert sind, sich mit den Sensoren zu verbinden.

7. Verfahren nach einem der vorhergehenden Ansprüche, wobei die Informationen, die Einbauorte der Sensoren identifizieren, zumindest einen Teil eines Gebäudes und/oder zumindest einen Teil eines Grundrisses des Gebäudes umfassen.

8. Verfahren nach einem der vorhergehenden Ansprüche, wobei die Informationen, die einen oder mehrere Sensoren identifizieren, und die Informationen, die Installationsorte der Sensoren identifizieren, von mindestens einer Smartphone-Anwendung erhalten werden, die dafür konfiguriert ist, auf Sensoren bereitgestellte Tags/Codes zu lesen.

9. Benutzer-Cloud-Plattform zur Überwachung von Einrichtungen durch Sensoren gemäß unterschiedlichen loT-Protokollen, **dadurch gekennzeichnet, dass** die Nutzer-Cloud-Plattform konfiguriert ist, um Benutzerschnittstellen für ein oder mehrere Benutzergeräte bereitzustellen, und mindestens einen Prozessor und mindestens einen Speicher umfasst, der Computerprogrammcode speichert, der bei Ausführung Folgendes bewirkt:
Erhalten (102), auf der Benutzer-Cloud-Plattform, von Informationen, die die Sensoren identifizieren, die mit Sensor-Cloud-Plattformen verbunden sind, und von Informationen, die Installationsorte der Sensoren identifizieren;
Bestimmen (104), auf der Benutzer-Cloud-Plattform, der Sensor-Cloud-Plattformen, die IoT-Protokolle der Sensoren unterstützen, basierend auf den erhaltenen Informationen;
Hinzufügen (106), auf der Benutzer-Cloud-Plattform, von Benutzerschnittstellenelementen, die jeden der Sensoren darstellen, zu mindestens einem Überwachungs-Toolset, das auf den Benutzerschnittstellen bereitzustellen ist;
Bewirken (108) auf der Benutzer-Cloud-Plattform als Reaktion auf eine Benutzerschnittstellenaktion auf einem Benutzerschnittstellenelement des ÜberwachungsToolsets:
- die Datenübertragung von der Sensor-Cloud-Plattform zur Benutzer-Cloud-Plattform als Reaktion auf die Aktion der Benutzerschnittstelle zu aktivieren, und Sensordaten von der Sensor-Cloud-Plattform zu empfangen, die mit dem Sensor durch ein IoT-Protokoll verbunden ist, das von dem Sensor unterstützt wird, der dem Benutzerschnittstellenelement zugeordnet ist; und Bewirken (108), auf der Benutzer-Cloud-Plattform, als Reaktion auf eine weitere Benutzerschnittstellenaktion auf dem Benutzerschnittstellenelement oder einem Indikator des Benutzerschnittstellenelements:
- die Datenübertragung von der Sensor-Cloud-Plattform zur Nutzer-Cloud-Plattform zu deaktivieren und den Empfang von Sensordaten von der mit dem Sensor verbundenen Sensor-Cloud-Plattform zu unterbinden.

10. Benutzer-Cloud-Plattform nach Anspruch 9, umfassend einen Computerprogrammcode, der bei seiner Ausführung bewirkt, dass das Verfahren nach einem der Ansprüche 2 bis 8 ausgeführt wird.

11. Computerprogramm, das Anweisungen umfasst, die, wenn sie von einer Benutzer-Cloud-Plattform ausgeführt werden, bewirken, dass ein Verfahren nach einem der Ansprüche 1 bis 8 ausgeführt wird.

12. Computerlesbares Medium mit Anweisungen, **dadurch gekennzeichnet, dass** die Ausführung der Anweisungen durch eine Benutzer-Cloud-Plattform Folgendes bewirkt:
Erhalten (102), auf einer Benutzer-Cloud-Plattform, die so konfiguriert ist, dass sie Benutzerschnittstellen für ein oder mehrere Benutzergeräte bereitstellt, von Informationen, die Sensoren gemäß unterschiedlichen IoT-Protokollen identifizieren, die mit Sensor-Cloud-Plattformen verbunden sind, und von Informationen, die Installationsorte der Sensoren identifizieren;
Bestimmen (104), auf der Benutzer-Cloud-Plattform, der Sensor-Cloud-Plattformen, die IoT-Protokolle der Sensoren unterstützen, basierend auf den erhaltenen Informationen;
Hinzufügen (106), auf der Benutzer-Cloud-Plattform, von Benutzerschnittstellenelementen, die jeden der Sensoren darstellen, zu mindestens einem Überwachungs-Toolset, das auf den Benutzerschnittstellen bereitzustellen ist;
Bewirken (108), auf der Benutzer-Cloud-Plattform, als Reaktion auf eine Benutzerschnittstellenaktion auf einem Benutzerschnittstellenelement des Überwachungstoolsets:
- die Datenübertragung von der Sensor-Cloud-Plattform zur Benutzer-Cloud-Plattform als Reaktion auf die Aktion der Benutzerschnittstelle zu aktivieren, und Sensordaten von der Sensor-Cloud-Plattform zu empfangen, die mit dem Sensor durch ein IoT-Protokoll verbunden ist, das von dem Sensor unterstützt wird, der dem Benutzerschnittstellenelement zugeordnet ist; und Bewirken (108), auf der Benutzer-Cloud-Plattform, als Reaktion auf eine weitere Benutzerschnittstellenaktion auf dem Benutzerschnittstellenelement oder einem Indikator des Benutzerschnittstellenelements:
- die Datenübertragung von der Sensor-Cloud-Plattform zur Nutzer-Cloud-Plattform zu deaktivieren und den Empfang von Sensordaten von der mit dem Sensor verbundenen Sensor-Cloud-Plattform zu unterbinden.

## Revendications

1. Procédé **caractérisé en ce que** le procédé est destiné à surveiller des installations par des capteurs selon différents protocoles Iot, dans lequel le procédé comprend :
l'obtention (102), au niveau d'une plateforme cloud utilisateur configurée pour fournir des interfaces utilisateur à un ou à plusieurs dispositifs utilisateur,
des informations identifiant les capteurs connectés aux plateformes cloud capteur et des informations identifiant des emplacements d'installation des capteurs ;
la détermination (104), au niveau de la plateforme cloud utilisateur, des plateformes cloud capteur qui prennent en charge les protocoles lot des capteurs sur la base des informations obtenues ;
l'ajout (106), au niveau de la plateforme cloud utilisateur, d'éléments d'interface utilisateur représentant chacun des capteurs à au moins un ensemble d'outils de surveillance à fournir sur les interfaces utilisateur ;
le fait de provoquer (108), au niveau de la plateforme cloud utilisateur, en réponse à une action d'interface utilisateur sur un élément d'interface utilisateur de l'ensemble d'outils de surveillance :
- l'activation d'un transfert de données de la plateforme cloud capteur vers la plateforme cloud utilisateur en réponse à l'action de l'interface utilisateur et la réception de données de capteur de la plateforme cloud capteur connectée au capteur par un protocole lot pris en charge par le capteur associé à l'élément d'interface utilisateur ; et le fait de provoquer (108), au niveau de la plateforme cloud utilisateur, en réponse à une autre action d'interface utilisateur sur l'élément d'interface utilisateur ou un indicateur de l'élément d'interface utilisateur :
- la désactivation du transfert de données de la plateforme cloud capteur vers la plateforme cloud utilisateur et l'arrêt de la réception de données de capteur depuis la plateforme cloud capteur connectée au capteur.

2. Procédé selon la revendication 1, dans lequel l'action d'interface utilisateur provoque au moins en partie l'association de l'élément d'interface utilisateur ou d'un indicateur de l'élément d'interface utilisateur à une représentation visuelle de l'emplacement d'installation du capteur.

3. Procédé selon la revendication 2, dans lequel l'élément d'interface utilisateur ou l'indicateur est configuré pour s'adapter sur la base des données de capteur reçues et/ou de l'état du capteur depuis la plateforme cloud capteur.

4. Procédé selon la revendication 1, dans lequel les communications de données de capteur du capteur sont activées ou désactivées par l'intermédiaire d'une interface entre la plateforme cloud capteur et la plateforme cloud utilisateur.

5. Procédé selon la revendication 4, dans lequel l'interface est une interface de service Web.

6. Procédé selon l'une quelconque des revendications précédentes, dans lequel les informations d'identification des capteurs comprennent des identifiants des capteurs et des identifiants de plateformes cloud capteur configurées pour se connecter aux capteurs.

7. Procédé selon l'une quelconque des revendications précédentes, dans lequel les informations identifiant des emplacements d'installation des capteurs comprennent au moins une partie d'un bâtiment et/ou au moins une partie d'un plan d'étage du bâtiment.

8. Procédé selon l'une quelconque des revendications précédentes, dans lequel les informations identifiant un ou plusieurs capteurs et les informations identifiant des emplacements d'installation des capteurs sont obtenues à partir d'au moins une application de téléphone intelligent configurée pour lire des balises/codes fournis sur des capteurs.

9. Plateforme cloud utilisateur pour la surveillance d'installations par des capteurs selon différents protocoles Iot, **caractérisée en ce que** la plateforme cloud utilisateur est configurée pour fournir des interfaces utilisateur à un ou à plusieurs dispositifs utilisateur et comprend au moins un processeur et au moins une mémoire stockant un code de programme informatique qui, lorsqu'il est exécuté, provoque :
l'obtention (102), au niveau de la plateforme cloud utilisateur, d'informations identifiant les capteurs connectés aux plateformes cloud capteur et des informations identifiant des emplacements d'installation des capteurs ;
la détermination (104), au niveau de la plateforme cloud utilisateur, des plateformes cloud capteur qui prennent en charge les protocoles lot des capteurs sur la base des informations obtenues ;
l'ajout (106), au niveau de la plateforme cloud utilisateur, d'éléments d'interface utilisateur représentant chacun des capteurs à au moins un ensemble d'outils de surveillance à fournir sur les interfaces utilisateur ;
le fait de provoquer (108), au niveau de la plateforme cloud utilisateur, en réponse à une action d'interface utilisateur sur un élément d'interface utilisateur de l'ensemble d'outils de surveillance :
- l'activation d'un transfert de données de la plateforme cloud capteur vers la plateforme cloud utilisateur en réponse à l'action de l'interface utilisateur et la réception de données de capteur de la plateforme cloud capteur connectée au capteur par un protocole lot pris en charge par le capteur associé à l'élément d'interface utilisateur ; et
le fait de provoquer (108), au niveau de la plateforme cloud utilisateur, en réponse à une autre action d'interface utilisateur sur l'élément d'interface utilisateur ou un indicateur de l'élément d'interface utilisateur :
- la désactivation du transfert de données de la plateforme cloud capteur vers la plateforme cloud utilisateur et l'arrêt de la réception de données de capteur depuis la plateforme cloud capteur connectée au capteur.

10. Plateforme cloud utilisateur selon la revendication 9, comprenant un code de programme informatique qui, lorsqu'il est exécuté, provoque l'exécution du procédé selon l'une quelconque des revendications 2 à 8.

11. Programme informatique comprenant des instructions qui, lorsqu'elles sont exécutées par une plateforme cloud utilisateur, provoquent l'exécution d'un procédé selon l'une quelconque des revendications 1 à 8.

12. Support lisible par ordinateur comprenant des instructions, **caractérisé en ce que** l'exécution des instructions par une plateforme cloud utilisateur provoque :
l'obtention (102), au niveau d'une plateforme cloud utilisateur configurée pour fournir des interfaces utilisateur à un ou à plusieurs dispositifs utilisateur,
d'informations identifiant des capteurs selon différents protocoles lot connectés à des plateformes cloud capteur et des informations identifiant des emplacements d'installation des capteurs ;
la détermination (104), au niveau de la plateforme cloud utilisateur, des plateformes cloud capteur qui prennent en charge les protocoles lot des capteurs sur la base des informations obtenues ;
l'ajout (106), au niveau de la plateforme cloud utilisateur, d'éléments d'interface utilisateur représentant chacun des capteurs à au moins un ensemble d'outils de surveillance à fournir sur les interfaces utilisateur ;
le fait de provoquer (108), au niveau de la plateforme cloud utilisateur, en réponse à une action d'interface utilisateur sur un élément d'interface utilisateur de l'ensemble d'outils de surveillance :
- l'activation d'un transfert de données de la plateforme cloud capteur vers la plateforme cloud utilisateur en réponse à l'action de l'interface utilisateur et la réception de données de capteur de la plateforme cloud capteur connectée au capteur par un protocole lot pris en charge par le capteur associé à l'élément d'interface utilisateur ; et
le fait de provoquer (108), au niveau de la plateforme cloud utilisateur, en réponse à une autre action d'interface utilisateur sur l'élément d'interface utilisateur ou un indicateur de l'élément d'interface utilisateur :
- la désactivation du transfert de données de la plateforme cloud capteur vers la plateforme cloud utilisateur et l'arrêt de la réception de données de capteur depuis la plateforme cloud capteur connectée au capteur.
